# EUROPEAN PATENT APPLICATION

(11) **EP 3 493 592 A1**
(43) Date of publication of application: **05.06.2019**
(21) Application number: 17205183.1
(22) Date of filing: 04.12.2017
(51) Int. Cl.: H04W 28/26, H04W 72/08, H04W 48/18

(54) **METHODS AND APPARATUSES FOR ALLOCATING RESOURCES FOR THE PROVISION OF A SERVICE**

(71) Applicant: Telia Company AB, 169 94 Solna (SE)
(72) Inventor: JALKANEN, Tero, 04300 Tuusula (FI); SARAJISTO, Tomi, 00790 Helsinki (FI)
(74) Representative: Groth & Co. KB

(57) **Abstract**

The present embodiments relate to allocation of radio network resources for providing a Ultra-Reliable Low-latency Communications (URLLC) service to a device (110). One method comprises: receiving (201) a request for the URLLC service, the request comprises information on at least: a location of the device, a requested frequency range and a time period during which the URLCC service is to be provided; transmitting (202) a request to a software-based radio access network (120), for allocating URLLC resources; the request including said information; setting up (204) a network edge cloud software component for the provision of the URLLC service; and notifying (206) the device of the allocation of the URLLC resources and of the setting up of the software component, for allowing the URLLC service to be provided to the device. The embodiments also relate to a device (110), a core network node (150) and a radio access network node (120).

## Description

### TECHNICAL FIELD

The present disclosure relates to the field of wireless communications and, in particular, to methods and apparatuses for allocating resources for the provision of a reliable low-latency communications service to devices in a network.

### BACKGROUND

Communication networks enabled by technologies such as Network Function Virtualization (VNF), and Software Defined Networking (SDN) may be flexibly organized to serve various customer demands. VNF and SDN are part of the 5G network architecture. There are several important features brought up by 5G that will be used for mission critical communications, like reliable remote action with robots or coordination among vehicles. Ultra-Reliable Low-Latency communication (URLLC) and Machine-Type Communication (MTC) are examples of such features.

A vertical industry company, such as a factory, harbor or plant might have its own very strict requirement for wireless connectivity services, in terms of latency and reliability. For example, a factory might require to use a completely proprietary solution optimized specifically for the factory needs.

One way to fulfil this requirement is to use non-licensed frequency bands, such as WiFi bands, and to run a proprietary solution in such a radio environment. A drawback with this approach is that the frequency band can be utilized by others leading to interference and therefore the quality of service cannot be guaranteed in addition to that the requirements of the wireless service cannot be fulfilled.

There is therefore a need for a new solution that solves at least the above stated problems.

### SUMMARY

It is an object of embodiments herein to solve the above problems by providing methods, and apparatuses for allocating radio resources for the provision of an Ultra-Reliable Low-Latency Communications (URLLC) service to devices in a network environment.

According to an aspect of embodiments herein, there is provided a method performed by a core network node, for providing a URLLC service to a device. The method comprising: receiving, from the device, a request for the URLLC service, wherein the request comprises information on at least: a location of the device, a requested frequency range and a time period during which the URLCC service is to be provided. The method also comprises transmitting a request to a software-based radio access network, for allocating URLLC resources for the provision of the URLLC service. The request includes the above stated information. The method further comprises setting up a network edge cloud software component for the provision of the URLLC service and notifying the device of the allocation of the resources and of the setting up of the software component, for allowing the URLLC service to be provided to the device.

According to another aspect, there is also provided a core network node for allocating radio network resources for providing a URLLC service to a device. The core network node comprises a processor and a memory containing instructions executable by the processor whereby the core network node is configured to: receive, from a device, a request for a URLLC service, wherein the request includes information on at least: a location of the device, a requested frequency range and a time period during which the URLLC service is to be provided. The core network node is further configured to transmit a request to a software-based radio access network, for allocating URLLC resources, the request including said information. The core network node is further configured to set up a network edge cloud software component for the provision of the URLLC service and to notify the device of the allocation of the resources and of the setting up of the software component for allowing the URLLC service to be provided to the device.

According to another aspect of embodiments therein, there is provided a method performed by a radio access network node, for allocating URLLC resources for providing a URLLC service to a device, the method comprising: receiving, from a core network node, a request for allocating URLLC resources; the request including information on at least: a location of the device, a requested frequency range and a time period during which the URLLC service is to be provided. The method further comprising, allocating the URLLC resources for the provision of the URLLC service and setting up a dedicated network operating within the requested frequency range for the provision of the URLLC service close to the location of the device; and sending an acknowledgement to the core network node confirming the setting up of the dedicated network.

According to another aspect of embodiments herein, there is provided a method performed by a device requesting a URLLC service, the method comprising: sending, to a core network node, a request for the URLLC service, wherein the request includes information on at least: a location of the device, a requested frequency range and a time period during which the URLLC service is to be provided. The method further comprises: receiving a notification from the core network node; confirming an allocation of URLLC resources at a radio access network node, and confirming a setting up of a network edge cloud software component in an edge cloud for allowing the URLLC service to be provided to the device. The method further comprises: attaching to a RAN node of a software-based RAN, close to the location of the device indicated in the request, and to the edge cloud; and start using or consuming the URLLC service over the RAN node.

According to yet another aspect herein, there is provided a device requesting a URLLC service, the device comprising a processor and a memory containing instructions executable by the processor wherein the device is operative to: send, to a core network node, a request for the URLLC service, the request includes information on at least: a location of the device, a requested frequency range and a time period during which the URLLC service is to be provided. The device is further operative receive a notification from the core network node, confirming an allocation of URLLC resources at a radio network node, and confirming a setting up of a network edge cloud software component in an edge cloud for allowing the URLLC service to be provided to the device. The device is further operative to attach to a RAN node of a software-based RAN, close to the location of the device and to the edge cloud and to start using or consuming the URLLC service over the RAN node.

An advantage with embodiments herein is to allow an operator to dynamically provide a dedicated network with dedicated resources to a device or customer requesting a highly demanding service in terms of latency and reliability.

Another advantage with embodiments herein is to provide an interference-free URLLC service in the location of the device and during the requested time period.

Additional advantages achieved by the invention will become apparent from the following detailed description when considered in conjunction with the accompanying drawings.

### BRIEF DESCRIPTION OF THE DRAWINGS

Example of embodiments herein are described in more detail with reference to attached drawings in which:
- Figure 1: illustrates a network scenario wherein exemplary embodiments herein may be employed.
- Figure 2: illustrates a signaling diagram according to exemplary embodiments herein.
- Figure 3: illustrates a flowchart of a method performed by a core network node according to some embodiments herein.
- Figure 4: illustrates a flowchart of a method performed by radio access network node according to some embodiments herein.
- Figure 5: illustrates a flowchart of a method performed by device according to some embodiments herein.
- Figure 6: illustrates a block diagram of a core network node according to some embodiments herein.

- Figure 7: illustrates a block diagram of a RAN node according to some embodiments herein.
- Figure 8: illustrates a block diagram of a device according to some embodiments herein.

### DETAILED DESCRIPTION

In the following, a detailed description of the exemplary embodiments is presented in conjunction with the accompanying drawings to enable easier understanding of the solution(s) described herein.

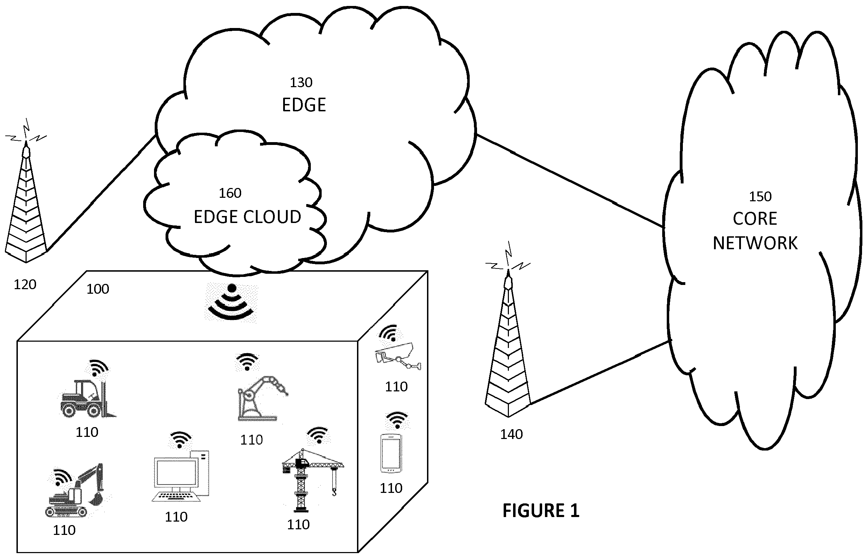

Referring to **Figure 1****,** there is depicted a network scenario wherein embodiments herein may be employed.

As shown, the network scenario includes a core network 150, an edge network 130 connected to a software-based radio access network (RAN) which includes a RAN node in the form of radio base station 120 (e.g. a eNodeB), which is operatively connected wirelessly to devices 110 in premises of a vertical industry company 100 such as a factory or a plant etc. Examples of devices 110, provided with wireless connectivity means, may include industry robots, smartphones, surveillance cameras, computer systems, tractors, excavators, cranes etc.

The core network 150 is also shown connected to another RAN node 140 or eNodeB. As will be described, and according to embodiments herein, an edge cloud software component 160 of the edge network 130 is provided by the operator of the core network 150 for the provision of a service to device(s) 110 in the area 100 of the company. The edge cloud 160 is the software part of the edge network 130. This is schematically shown in Figure 1 where the edge cloud 160 is part of the edge network 130.
It should be mentioned that the exemplary embodiments herein are not restricted to a factory or plant. Another example of a vertical industry company is a harbor, an airport, an oil company, a hospital, etc.

Devices 110 within the company may have different requirements on wireless communication services in order to operate correctly and without interruptions. For example, in the field of industrial automation, a trend exists involving the increasing use of wireless communication in automation networks. Usually, industrial robots are programmed to perform very precise operations that need to fulfill stringent requirements in terms of speed, latency, level of interference and reliability. As previously described, a network operating within an un-licensed frequency band (e.g. WiFi band) may be used for providing communication services to devices 110. However, this frequency band can be utilized by others which may lead to a high degree of interference. This is a crucial issue in case of service, such as operating remote controlled equipment like a crane in a construction area or a container carrier in a harbor or a robot in a factory.

The embodiments of the present invention provide a solution that cope with the above issues.

Assume that RAN node (eNodeB) 140 is a 3G, 4G (LTE) or 5G radio base station capable in providing "normal" communications services whereas RAN node 120 is used for providing a URLLC service to device(s) 110 in accordance with the present invention.

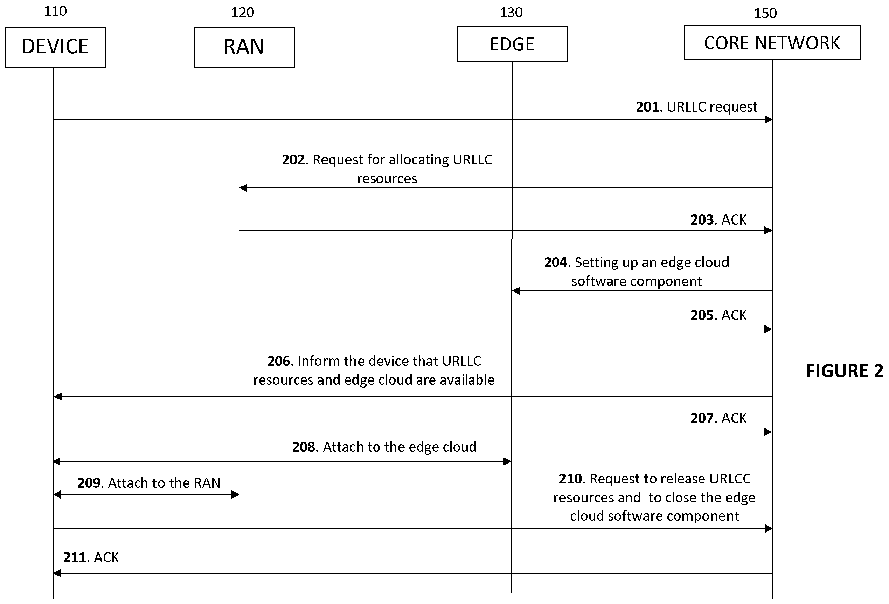

Referring to **Figure 2****,** there is depicted a signaling diagram for allocating radio URLLC radio resources for the provision of a URLLC service to a device 110.
It should be mentioned that each device 110 shown in Figure 1 may have its own requirements.

The device 110 sends a request (201) for a URLLC service to the core network 150 of an operator. The software-based or software-defined RAN of the operator is capable of dynamically providing the requested RAN URLLC resources. In addition, a network edge network 130 is operated by the operator of the core network 150 for setting up a network edge cloud software component 160 (not shown) as part of the URLLC radio network connectivity over RAN node 120. In the edge cloud, additional functionalities such as container-based virtualization network function (VNF) applications can be run for enabling the device 110 to consume or use the URLLC service. Virtualization and Cloudification refer to execution of network functions on top of virtualized (and shared) computing, storage, and networking resources controlled by a cloud operative system.

Referring back to Figure 2, the URLLC request from the device 110 includes information on at least: a location of the device 110, a requested frequency range and a time period during which the URLLC service is to be provided. Information on the network type or protocol may also be included in the request. An example of a request is presented below:
*"Set up Protocol X connectivity for URLLC service in 3.5 GHz frequency range for 100m*10*m*30m service area centered in coordinates 66°55'N 44°33'E for time period between 05:00 and 23:00".*

As shown, the service area may be indicated in the request in addition to the location information (GPS coordinates). The device 110 may also request a protocol type X which may be HTTP, TCP or UDP or any suitable protocol for the provision of the URLLC service.

The requested frequency range is a licensed frequency range that belongs to the operator of the core network 150. An operator may operate in different frequency ranges from 700 MHz to 60 GHz depending on the actual use case.
Instead of selling the frequency range, the operator may decide to lease it for a predetermined time period. In some cases a factory only operates between 06:00 AM and 18:00 PM. Leasing the requested frequency range during this time period allows the operator to use the same frequency range for other purposes between 18:01 PM and 05:59 AM. Or, if the factory notices that they do not actually need the whole frequency range, the operator may instead automatically allocate the range to other parties based on current network load requirements and available capacity. In this case, the operator may constantly measure the amount of traffic in the radio network and use intelligent features such as big data analytics and statistics to determine which party would need the network most at this moment.

The device 110 may send the URLCC request via eNodeB 140. The request may be sent via SMS, MMS or any suitable service. When the core network (node) 150 receives the request, it analyses it based on the information provided in the request and if it is approved, the core network (node) 150 transmits a request (202) to the software-based RAN node 120, close to the location of the device 110, for requesting URLLC resources. The request to the RAN node 120 includes the information provided in the initial URLLC request (201). By allocation of URLLC resources is meant allocation of a dedicated network operating within the requested frequency range indicated in the URLLC request (202). By dedicated is meant at least logically or virtually. Physically, the network may be shared among other parties/companies requesting the same service in the same area as long as the requirements of the URLLC service are met and the cloud is not overloaded. The RAN node 120 acknowledges (203) the request and sets up a URLLC dedicated network.

The core network 150 sets up (204) an edge cloud software component 160 (see figure 1) in the requested location via the edge network 130. The edge cloud 160 and the edge network 130 are created on request. The software components of the edge cloud 160, such as containers running the necessary services are offered to the device 110 for it to consume the URLLC service. Therefore, the edge network 130 and the edge cloud software component 160 are deployed only when needed as close as possible to the device 110 to ensure that the strict requirements on latency etc. are fulfilled. The software component may include core network-like features such as routing, in order to transfer core network intelligence closer to the device 110 to fulfill the very strict latency/jitter demands of the URLLC service.
The edge network 130 informs (205) the core network 150 that the edge cloud 160 is now available by sending an acknowledgement and the core network 150 informs the device 110 that both the URLLC resources and the edge cloud 160 are available (206).

The device 110 acknowledges (207) and attaches (208-209) to both the edge cloud 160 and to the URLLC RAN node 120.
Now that the device 110 is attached to the RAN and to the edge cloud 160, the requested URLLC service may be consumed or used during the time period indicated in the request (201), in the location of the device 110 and in the frequency range of the URLLC dedicated network.

According to an embodiment, when the time period expires, the core network (node) 150 may automatically release the allocated URLLC resources and close or delete the edge cloud software component. The device 110 then detaches from the edge cloud and from the RAN and may return to the previous network connection with RAN node 140.

According to another embodiment, the device 110 may send a request (210) to the core network 150 to shut down or close the edge cloud software component and also to release the URLLC resources. The core network 150 acknowledges such a request (211).

The device 110 may send such a request before the expiry of the time period indicated in the request. This may be due to the device 110 having performed the necessary activity and is no longer in need of the URLLC service. The device 110 may then return to previous network connection with RAN node 140.

As previously described, the operator of the core network 150 may allocate the released URLLC resources and set up the edge cloud software component to another party requesting the URLLC service. Hence, the above operations may be performed when needed in order to e.g. save costs related to software licenses or to lease the available frequency range for other purposes/services such as massive MTC (Mobile Type Communications) or massive (Internet-of-Things) IoT deployment services which have other requirements as compared to the requirements of URLLC services.

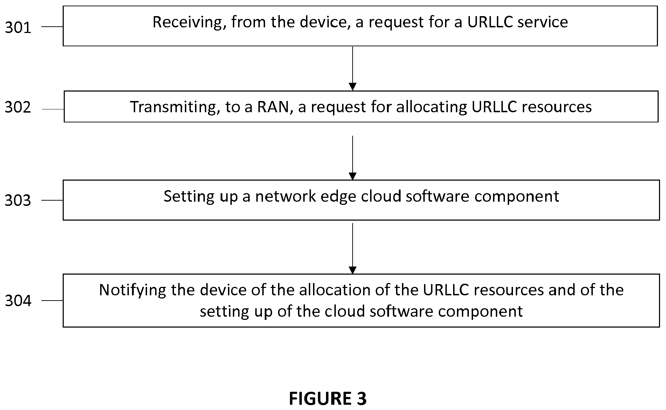

Referring to **Figure 3****,** there is depicted a flowchart of a method performed by a core network node in accordance with previously described embodiments. As shown, the method comprises:
(301) receiving, from the device 110, a request for a URLLC service. The request includes information on at least the location of the device, a requested frequency range and a time period during which the URLLC service is to be provided. As mentioned before, the request may also include a desired protocol. In case the core network has capability to offer the requested service in accordance with the information provided in the request, the method further comprises:
   (302) transmitting, to a software-based or software-defined RAN, a request for allocating URLLC resources for the provision of the URLLC service. The request includes said information. The RAN acknowledges the request. The method further comprises (303) setting up a network edge cloud software component in the location of the device 110, and
   (304) notifying the device 110 of the allocation of the URLLC resources and of the setting up of the cloud software component 160 (i.e. the edge cloud) for allowing the URLLC service to be provided to the device 110.
   As previously described, the device 110 may use or consume the URLLC service during the time period indicated in the request or upon the device 110 requesting the core network node to release the URLLC resources and delete the cloud software component.

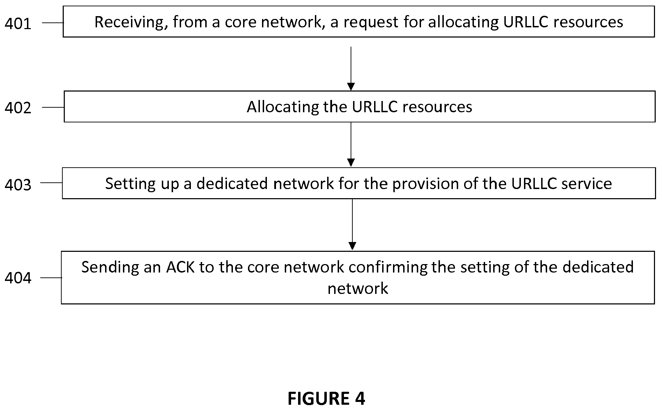

Referring to **Figure 4****,** there is depicted a flowchart of a method performed by a RAN node 120 for allocating URLCC resources for providing a URLLC service to a device. As shown, the method comprises:
(401) receiving, from a core network node, a request for allocating the URLLC resources. As previously disclosed, the request includes information on at least a location of the device, a requested frequency range and a time period during which the service is to be provided.
(402) allocating the URLLC resources;
(403) setting up a dedicated network operating within the requested frequency range for the provision of the URLLC service in the location of the device; and
(404) sending an acknowledgement to the core network confirming the setting up of the dedicated network.

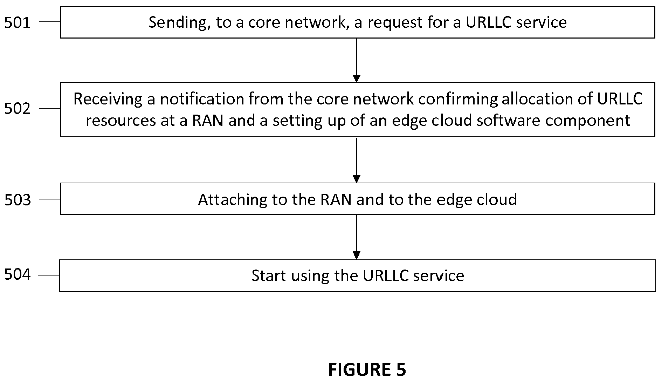

Referring to **Figure 5****,** there is illustrated a flowchart of a method performed by a device according to previously described embodiments. As shown, the method comprises:
(501) sending, to the core network, a request for a URLLC service, the request including information on at least a location of the device, a requested frequency range and a time period during which the service is to be provided;
(502) receiving, from the core network, a notification confirming the allocation of the URLLC resources at a RAN and a setting up of an edge cloud software component;
(503) attaching to the RAN and to the edge cloud; and
(504) start using or consuming the URLLC service over the RAN node.
As previously described, the device 110 may send a request to the core network to release the URLLC resources when the time period expires and receiving an acknowledgement from the core network node confirming the release of the resources and the deletion of edge software component.
The device 110 may further return to the previous RAN connection.
Additional details concerning the actions performed by the device 110 have already been described and need not be repeated.

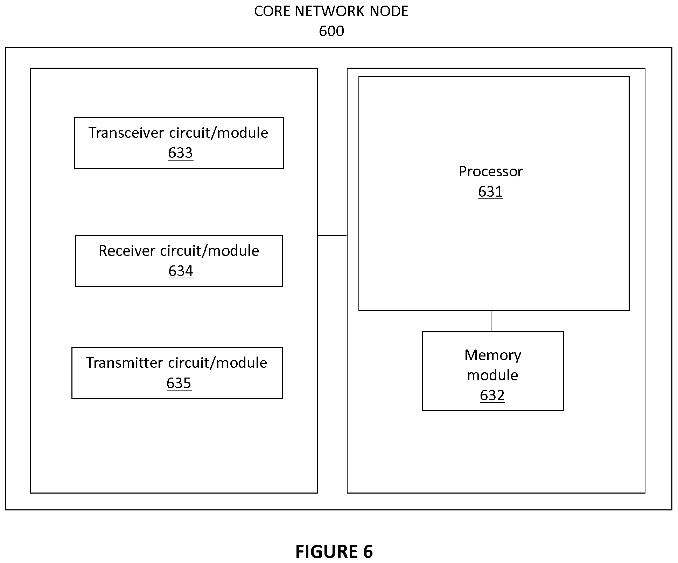

The present invention also relates to a core network node 600 to perform the method steps previously described in conjunction with Figures 2 and 3. An exemplary block diagram of the core network node 600 is depicted in **Figure 6****.** The network node 600 comprises a processing circuitry or a processing module or a processor 631; a memory module 632; a receiver circuit or receiver module 634; a transmitter circuit or a transmitter module 635 and a transceiver circuit or a transceiver module 633 which may include transmitter circuit 635 and receiver circuit 634. The core network node 600 may be provided with virtualization network functions.

The processor 631 is configured to execute program instructions from a computer program stored in a non-transitory computer-readable medium that is, or is accessible to the processing circuitry. Here, "non-transitory" does not necessarily mean permanent or unchanging storage, and may include storage in working or volatile memory, but the term does connote storage of at least some persistence. The execution of the program instructions stored in the memory module 632 specially adapts or configures the processor 631 to carry out the operations of the core network node 600 disclosed herein. Further, it will be appreciated that the core network node 600 may comprise additional components not shown in Figure 6.

The core network node 600, by means of processor 631, is operative to receive, from a device, a request for the URLLC service, wherein the request comprises information on at least: a location of the device, a requested frequency range and a time period during which the URLCC service is to be provided; transmit a request to a software-based radio access network, for allocating URLLC resources for the provision of the URLLC service; the request including said information; set up a network edge cloud software component for the provision of the URLLC service; and notify the device of the allocation of the URLLC resources and of the setting up of the software component, for allowing the URLLC service to be provided to the device. As previously described, the core network node 600 is further operative to provide the URLLC service via the software-based RAN, during the time period indicated in the request and to release the URLLC resources when the time period expires or when a request is received from the device to release the resources. The core network node 600 is further operative to delete or close the edge cloud software component.

There is also provided a computer program comprising instructions which when executed on at least one processor 631 of the core network node 600 according to embodiments herein, cause the processor 631 to carry out the method previously described. Also, a carrier containing the computer program is provided, wherein the carrier is one of a computer readable storage medium; an electronic signal, optical signal or a radio signal.

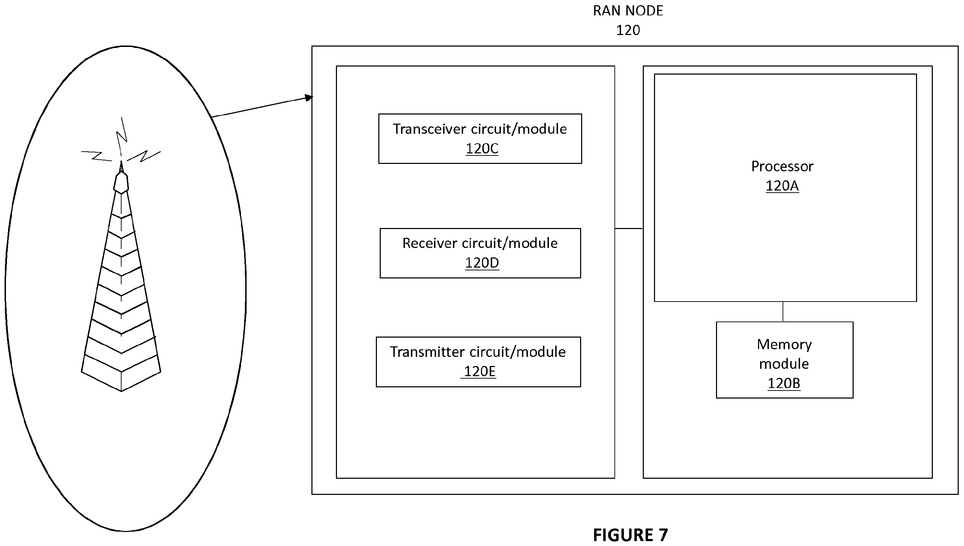

The present invention also relates to a RAN network node 120 to perform the method steps previously described in conjunction with Figures 2 and 4. An exemplary block diagram of the RAN network node 120 is depicted in **Figure 7****.** The RAN node 120 belongs to a software-based RAN and comprises a processing circuitry or a processing module or a processor 120A; a memory module 120B; a receiver circuit or receiver module 120D; a transmitter circuit or a transmitter module 120E and a transceiver circuit or a transceiver module 120C which may include transmitter circuit 120E and receiver circuit 120D. The RAN node 120 may include additional components not depicted in Figure 7.

The RAN node 120, by means of processor 120A, is operative to receive from a core network node, a request for allocating URLLC resources for the provision of the URLLC service, the request including information on at least: a location of the device, a requested frequency range and a time period during which the URLLC is to be provided; allocate the URLLC resources for the provision of the URLLC service; and set up a dedicated network operating within the requested frequency range for the provision of the URLLC service close to the location of the device. As previously described, by dedicated is meant logically dedicated. Physically, the RAN node 120 may be shared among other devices/companies etc. requesting a service in the same area.
The RAN node 120 is further operative to receive, from the core network node, a request to release the allocated URLLC resources when the time period expires.

There is also provided a computer program comprising instructions which when executed on at least one processor 120A of the RAN node 120 according to embodiments herein, cause the processor 120A to carry out the method previously described. Also, a carrier containing the computer program is provided, wherein the carrier is one of a computer readable storage medium; an electronic signal, optical signal or a radio signal.

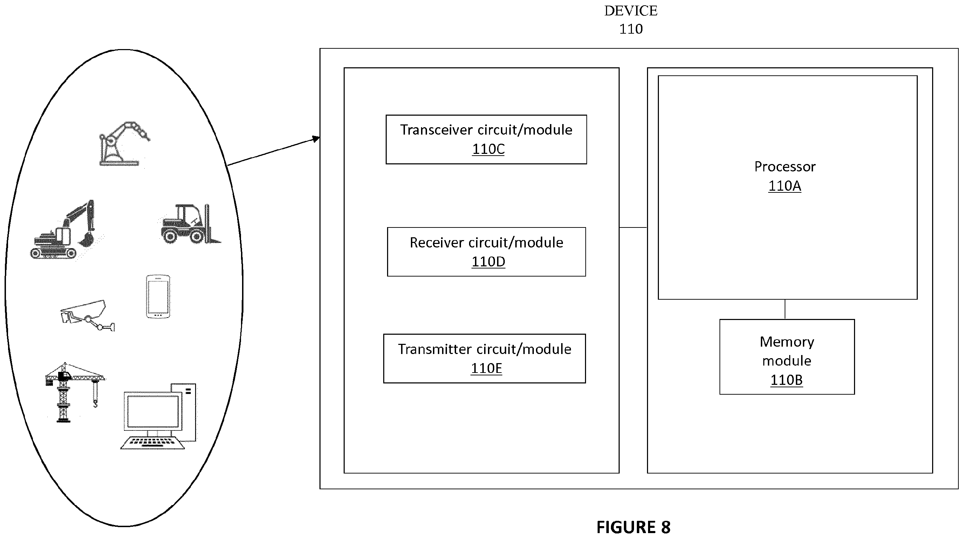

The present invention also relates to a device 110 to perform the method steps previously described in conjunction with Figures 2 and 5. An exemplary block diagram of a device is shown in **Figure 8****.** Examples of a device 110, provided with wireless connectivity means, may include industry robots, smartphones or user equipments, surveillance cameras, computer systems, tractors, excavators, cranes etc.

The device 110 comprises a processing circuitry or a processing module or a processor 110A; a memory module 110B; a receiver circuit or receiver module 110D; a transmitter circuit or a transmitter module 110E and a transceiver circuit or a transceiver module 110C which may include transmitter circuit 110E and receiver circuit 110D. The device 110 may include additional components not depicted in Figure 8.

The device 110, by means of processor 110A, is operative to send, to a core network node, a request for the URLLC service, wherein the request comprises information on at least: a location of the device, a requested frequency range and a time period during which the URLLC service is to be provided; receive a notification from the core network node, confirming an allocation of URLLC resources at a radio network node, and confirming a setting up of a network edge cloud software component in an edge cloud for allowing the URLLC service to be provided to the device; attach to a RAN node of a software-based RAN close to the location of the device indicated in the request, and to the edge cloud; and start using or consuming the URLLC service over the RAN node. The device 110 is further operative to send a request to the core network node to release the URLLC resources when the time period expires. Additional actions performed by the device have already been disclosed and need not be repeated.

There is also provided a computer program comprising instructions which when executed on at least one processor 100A of the device 110 according to embodiments herein, cause the processor 110A to carry out the method previously described. Also, a carrier containing the computer program is provided, wherein the carrier is one of a computer readable storage medium; an electronic signal, optical signal or a radio signal.

Several advantages are achieved with the described embodiments. One is to allow an operator to dynamically provide a dedicated network with dedicated resources to a device or customer requesting a highly demanding service in terms of latency and reliability. Another advantage with embodiments herein is to provide an interference-free URLLC service in the location of the device and during the requested time period.

Throughout this disclosure, the word "comprise" or "comprising" has been used in a nonlimiting sense, i.e. meaning "consist at least of". Although specific terms may be employed herein, they are used in a generic and descriptive sense only and not for purposes of limitation. In particular, the embodiments herein may be applicable 4G or 5G networks or any network capable in providing a highly demanding service in terms of latency and reliability.

## Claims

1. A method performed by a core network node (150, 600), for allocating radio network resources for providing a Ultra-Reliable Low-latency Communications, URLLC service to a device (110), the method comprising:
- receiving (201, 301) from the device (110) a request for the URLLC service, wherein the request comprises information on at least: a location of the device, a requested frequency range and a time period during which the URLCC service is to be provided;
- transmitting (202, 302) a request to a software-based radio access network (120), for allocating URLLC resources for the provision of the URLLC service; the request including said information;
- setting up (204, 303) a network edge cloud software component for the provision of the URLLC service; and
- notifying (206, 304) the device (110) of the allocation of the URLLC resources and of the setting up of the software component, for allowing the URLLC service to be provided to the device (110).

2. The method according to claim 1 further comprising: providing the URLLC service to the device (110), via the software-based radio access network, during the time period indicated in the request received from the device, and releasing the URLLC resources when the time period expires.

3. The method according to claim 1 or claim 2 wherein the allocated URLLC resources correspond to a dedicated network operating within the requested frequency range for the provision of the URLLC service.

4. The method according to claim 1 or claim 2 comprising receiving (210) a request from the device to release the URLLC resources; releasing the URLLC resources and closing or deleting the edge cloud software component.

5. A method performed by a RAN node (120) of a software-based RAN, for allocating radio network resources, for providing a Ultra-Reliable Low-latency Communications, URLLC, service to a device (110), the method comprising:
- receiving (202, 401), from a core network node (150, 600), a request for allocating URLLC resources for the provision of the URLLC service, the request including information on at least: a location of the device (110), a requested frequency range and a time period during which the URLLC is to be provided;
- allocating (402) the URLLC resources for the provision of the URLLC service;
- setting up (403) a dedicated network operating within the requested frequency range for the provision of the URLLC service in to the location of the device.
- sending (404) an acknowledgement to the core network, confirming the setting up of the dedicated network.

6. The method according to claim 5 further comprising: receiving, from the core network node, a request to release the allocated URLLC resources when the time period expires.

7. A method performed by a device (110) requesting a Ultra-Reliable Low-latency Communications, URLLC, service; the method comprising:
- sending (201, 501), to a core network node (150, 600), a request for the URLLC service, wherein the request comprises information on at least: a location of the device, a requested frequency range and a time period during which the URLLC service is to be provided;
- receiving (206, 502) a notification from the core network node (150, 600), confirming an allocation of URLLC resources at a radio network node (120), and confirming a setting up of a network edge cloud software component in an edge cloud for allowing the URLLC service to be provided to the device.
- attaching (209, 208, 503) to a RAN node of a software-based RAN, close to the location of the device indicated in the request, and to the edge cloud; and
- start (504) using or consuming the URLLC service over the RAN node (120).

8. The method according to claim 7 further comprising, sending (210) a request, to the core network node (150, 600), to release the URLLC resources when the time period expires.

9. A core network node (150, 600) for allocating radio network resources for providing a Ultra-Reliable Low-latency Communications, URLLC service to a device (110), the core network node (150, 600) comprises a processor (631) and a memory (632) containing instructions executable by the processor (631) whereby the core network node (600) is operative to:
- receive, from the device (110), a request for the URLLC service, wherein the request comprises information on at least: a location of the device, a requested frequency range and a time period during which the URLCC service is to be provided;
- transmit a request to a software-based radio access network, for allocating URLLC resources for the provision of the URLLC service; the request including said information;
- set up a network edge cloud software component for the provision of the URLLC service; and
- notify the device (110) of the allocation of the URLLC resources and of the setting up of the software component, for allowing the URLLC service to be provided to the device.

10. The core network node (150, 600) according to claim 9 is operative to provide the URLLC service to the device (110), via the software-based radio access network, during the time period indicated in the request received from the device, and to release the URLLC resources when the time period expires.

11. The core network node (150, 600) according to claim 9 or claim 10 wherein the allocated URLLC resources correspond to a dedicated network operating within the requested frequency range for the provision of the URLLC service.

12. The core network node (150, 600) according to claim 9 or claim 10 is operative to receive a request from the device (110) to release the URLLC resources; and is further operative to release the URLLC resources and to close or delete the edge cloud software component.

13. A RAN node (120) of a software-based RAN, for allocating radio network resources, for providing a Ultra-Reliable Low-latency Communications, URLLC, service to a device (110), the RAN node (120) comprises a processor (120A) and a memory (120B) containing instructions executable by the processor (120A) whereby the RAN node is operative to:
- receive, from a core network node (150, 600), a request for allocating URLLC resources for the provision of the URLLC service, the request including information on at least: a location of the device, a requested frequency range and a time period during which the URLLC is to be provided;
- allocate the URLLC resources for the provision of the URLLC service; and
- set up a dedicated network operating within the requested frequency range for the provision of the URLLC service close to the location of the device.

14. The RAN node (120) according to claim 13 is further operative configured to receive, from the core network node (150, 600), a request to release the allocated URLLC resources when the time period expires.

15. A device (110) requesting a URLLC service; the device (110) comprising a processor (110A) and a memory (110B) containing instructions executable by the processor (110A) whereby the device (110) is operative to:
- send, to a core network node (150, 600), a request for the URLLC service, wherein the request comprises information on at least: a location of the device, a requested frequency range and a time period during which the URLLC service is to be provided;
- receive a notification from the core network node (150, 600), confirming an allocation of URLLC resources at a radio network node (120), and confirming a setting up of a network edge cloud software component in an edge cloud for allowing the URLLC service to be provided to the device;
- attach to a RAN node (120) of a software-based RAN, close to the location of the device indicated in the request, and to the edge cloud; and
- start using or consuming the URLLC service over the RAN node (120).
